# FASCICULE DE BREVET EUROPEEN

(11) **EP 1 910 099 B1**
(45) Date de publication et mention de la délivrance du brevet: **05.10.2011**
(21) Numéro de dépôt: 06764204.1
(22) Date de dépôt: 19.07.2006
(51) Int. Cl.: B60B 21/02, B60B 21/04, B60B 21/10

(54) **ROUE DE VEHICULE AVEC DES SIEGES DE DIAMETRES INEGAUX ET ENSEMBLE CONSTITUE D'UNE ROUE ET D'UN APPUI DE SOUTIEN**
FAHRZEUGRAD MIT SITZEN UNGLEICHEN DURCHMESSERS UND AUS EINEM RAD UND EINEM STÜTZELEMENT BESTEHENDE ANORDNUNG
VEHICLE WHEEL WITH SEATS OF UNEQUAL DIAMETERS AND ASSEMBLY CONSISTING OF A WHEEL AND OF A SUPPORT ELEMENT

(30) Priorité: 19.07.2005 FR 0507790
(43) Date de publication de la demande: 16.04.2008
(73) Titulaire: Société de Technologie Michelin, 63000 Clermont-Ferrand (FR); Michelin Recherche et Technique S.A., 1763 Granges-Paccot (CH)
(72) Inventeur: MALEVERGNE, Michel, F-63118 Cebazat (FR)
(74) Mandataire: Dequire, Philippe Jean-Marie Denis
(86) Numéro de dépôt international: PCT/EP2006/064403
(87) Numéro de publication internationale: WO 2007/010002

(56) Documents cités:
- EP-A- 1 351 832
- WO-A-01/08905
- FR-A- 2 809 348
- FR-A- 2 817 800

## Description

L'invention a pour objet une roue de véhicule avec des sièges de diamètres inégaux et un ensemble constitué d'une telle roue et d'un appui de soutien.

La demande WO 01/08905 décrit une roue de véhicule avec des sièges de diamètres inégaux et un ensemble constitué d'une telle roue et d'un appui de soutien. La roue de véhicule, présentée par ce document, de révolution, est destinée au montage d'un pneumatique et d'un appui de soutien de bande de roulement et comporte un disque et une jante. La jante est telle qu'elle comporte :
- un premier et un second siège destinés à recevoir et maintenir un premier et un second bourrelets du pneumatique, chaque siège ayant un fond sensiblement tronconique confondu localement avec un cône de révolution coaxial à la jante et ouvert vers l'autre siège, un bossage de sécurité prolongeant le fond du siège vers l'autre siège, et un rebord externe prolongeant le fond du siège du côté opposé à l'autre siège, et le diamètre maximum du premier siège étant inférieur au diamètre maximum du second siège ; et
- du premier siège vers le second siège, une première gorge circonférentielle, une portée d'appui de diamètre sensiblement égal au diamètre maximum du premier siège et une seconde gorge circonférentielle.

Cette roue est telle que le disque est relié à la jante du côté du premier siège.

La roue et l'ensemble roue appui présentés dans ce document permettent un roulage à plat dans d'excellentes conditions notamment avec des risques de décoincement des bourrelets des pneumatiques très réduits. Ils présentent cependant une sensibilité trop importante aux chocs, notamment sur le siège de plus grand diamètre de la roue situé du côté intérieur de la roue.

L'invention a pour objet une roue similaire dans laquelle, chaque siège comporte, du côté de l'autre siège, une gorge circonférentielle adjacente, et dans laquelle la zone de liaison entre le disque et la jante est reliée à la jante du côté du second siège.

Cette inversion de la position des deux sièges de jante en disposant le siège de plus grand diamètre ou second siège du côté extérieur de la roue, c'est-à-dire du côté relié au disque permet de placer la zone de la jante de plus grand diamètre dans une zone de très forte rigidité donc beaucoup moins sensible aux chocs que le siège du côté intérieur. Cela a aussi l'avantage de permettre une diminution du poids de la roue en raison des sollicitations mécaniques en fatigue plus faibles du siège intérieur ou premier siège.

Les gorges circonférentielles adjacentes aux sièges ont une fonction de gorge de montage. Ces gorges sont adaptées pour permettre le franchissement lors du montage et/ou du démontage du pneumatique sur la jante du siège par le bourrelet correspondant du pneumatique. Il est à noter que la gorge adjacente au second siège de plus grand diamètre a une profondeur (Hₘₐₓ) adaptée pour permettre le franchissement du second siège par le second bourrelet du pneumatique seulement. C'est-à-dire que le premier bourrelet du pneumatique ne peut pas franchir le second siège de la jante.

Lorsque le bossage de sécurité du second siège comporte une zone cylindrique de révolution ou « ledge » de largeur axiale L, la profondeur (Hₘₐₓ) de la gorge adjacente au second siège est fonction du diamètre maximum (Φ_{S2max}) du second siège et de la largeur axiale L du ledge.

En conséquence, en fonction de la géométrie et du diamètre du second siège, la profondeur de la seconde gorge circonférentielle peut être égale, inférieure ou supérieure à celle de la première gorge circonférentielle.

Avantageusement, la jante peut comporter entre les deux gorges une portée d'appui destinée à recevoir un appui de soutien.

Si l'on conserve pour l'ensemble roue appui et pneumatique le même aspect, c'est-à-dire le même diamètre du siège extérieur visible lorsque l'ensemble est monté sur un véhicule, la roue selon l'invention a l'avantage d'avoir une portée d'appui dont le diamètre peut être diminué sensiblement, de l'ordre de 20 mm par rapport aux ensembles actuellement définis par l'ETRTO (Standards Manual 2004, Rims, R. 14). Cela augmente la garde entre l'appui et la bande de roulement et ainsi diminue l'importance des efforts susceptibles d'être transmis au véhicule en cas de choc violent.

Avantageusement, lorsque le profil radialement intérieur de la jante présente progressivement du second siège vers la zone de liaison avec le disque un diamètre passant par un minimum (Φ_{JImin}) puis par un diamètre maximum (Φ_{JImax}) disposé axialement entre les premier et second sièges, la roue selon l'invention comprend au moins un canal débouchant d'une part dans la zone du profil radialement intérieur de la jante de diamètre compris entre les diamètres maximum (Φ_{JImax}) et minimum (Φ_{JImin}) et d'autre part à l'extérieur de la roue du côté du second siège.

La présence de ce canal permet l'évacuation vers l'extérieur de la roue des matières (eau, glace, boue, produits divers) et de les empêcher de s'accumuler dans cette zone intérieure de la roue.

De préférence, le canal débouche dans la zone radialement intérieure de la jante avec un diamètre (Φ_{Cl}) égal au diamètre maximum du profil intérieur de la jante (Φ_{JImax}) diminué d'au plus 3 mm.

La zone de rétention de matières diverses est ainsi suffisamment réduite pour que les conséquences en soient négligeables.

De préférence, le canal est confondu localement avec un secteur d'un cône de révolution ouvert vers le second siège.

On utilise la définition courante d'un cône de révolution, c'est-à-dire un solide de révolution à base circulaire terminé en pointe.

Cette inclinaison du canal garantit que toutes les matières qui vont s'engager dans le canal vont bien être expulsées facilement par gravité et en roulage par les efforts de centrifugation.

Selon un mode de réalisation particulier, le disque présentant une pluralité d'ajours de ventilation, le canal est une rainure ménagée dans la paroi radialement extérieure d'au moins l'un desdits ajours. Cette rainure a avantageusement une section droite avec un rayon de courbure élevé.

Selon un autre mode de réalisation qui peut être couplé avec le précédent, le disque présentant une pluralité d'ajours de ventilation disposés chacun entre deux rayons, le canal est ménagé dans au moins l'un des rayons.

Avantageusement, la portée d'appui de la jante comprend une nervure circonférentielle destinée à bloquer en position l'appui de soutien, notamment lorsque la dimension axiale de cet appui de soutien n'occupe qu'une fraction axiale de la zone de la jante entre les deux sièges.

L'invention a aussi pour objet un ensemble constitué d'une roue et d'un appui de soutien de bande de roulement, dans lequel l'appui de soutien est disposé autour de la portée d'appui et s'étend axialement jusqu'au second siège.

Avantageusement, l'appui comprend une partie de support disposée autour de la portée d'appui de la jante et une partie de blocage disposée radialement extérieurement relativement à la seconde gorge circonférentielle.

De façon préférentielle, le second siège étant prolongé vers le premier siège par un flanc de la seconde gorge circonférentielle, l'appui est adapté pour venir en appui contre le flanc de la seconde gorge circonférentielle.

Cela permet à la partie de blocage de l'appui de coopérer avec le bossage de sécurité du second siège de la jante pour garantir une excellente performance d'antidécoincement du bourrelet du pneumatique sans dégrader les possibilités de montage et de démontage du pneumatique.

De préférence l'ensemble selon l'invention est tel que la portée d'appui de la jante comporte une rainure circonférentielle qui coopère avec une pluralité de cales disposées circonférentiellement sur la paroi radialement intérieure de l'appui de soutien pour bloquer en position l'appui sur la portée d'appui.

Le montage d'un pneumatique sur une roue selon l'invention s'effectue selon le procédé suivant :
- on présente sur la jante de la roue, du côté du premier siège, le second bourrelet du pneumatique jusqu'à l'introduire dans la gorge de montage adjacente au second siège de la jante ;
- on effectue le montage du premier bourrelet sur le premier siège en poussant le bourrelet axialement de l'extérieur vers l'intérieur à l'aide d'un galet de montage ;
- on fait franchir le bossage de sécurité du second siège, le second siège et le rebord du second siège par le second bourrelet ; et
- on effectue le montage du second bourrelet sur le second siège en poussant le second bourrelet axialement de l'extérieur vers l'intérieur de la jante à l'aide d'un galet de montage.

Le montage d'un ensemble pneumatique et appui de soutien sur une roue selon l'invention peut se faire en utilisant le procédé décrit par exemple dans le brevet EP 1 351 832 B1.

D'autres caractéristiques et avantages de l'invention ressortent de la description faite ci-après en référence aux dessins annexés qui montrent, à titre d'exemples non limitatifs, des formes de réalisation de l'objet de l'invention :
- la figure 1 présente une vue en coupe méridienne partielle d'un ensemble appui, jante et pneumatique selon l'invention ;
- la figure 2 présente une vue en coupe méridienne partielle d'une roue selon l'invention ;
- la figure 3 présente une vue en perspective partielle extérieure d'une roue selon l'invention ;
- la figure 4 présente une vue en perspective partielle intérieure d'une roue selon l'invention ;
- la figure 5 présente une vue similaire à la figure 2 mais passant par un rayon du disque ; et
- la figure 6 présente une vue en coupe méridienne partielle une variante de roue selon l'invention non destinée à recevoir un appui ; et
- la figure 7 présente une vue en coupe méridienne partielle d'une autre variante de roue selon l'invention non destinée à recevoir un appui.

On entend par plan méridien ou axial tout plan passant par l'axe A de la roue et de la jante.

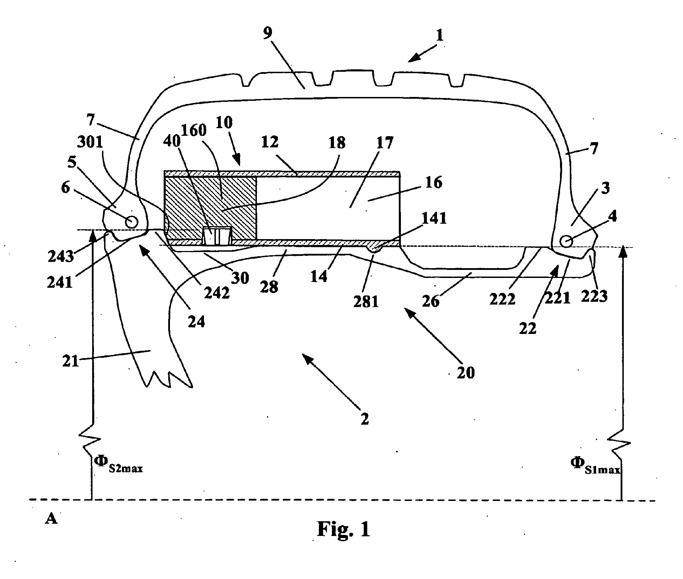

A la figure 1 est présenté, vu en section méridienne ou axiale partielle, un ensemble appui 10, jante 20 et pneumatique 1 selon l'invention. La jante 20 forme avec un disque 21 une roue 2 monobloc. Le disque peut aussi être fabriqué indépendamment de la jante et réuni à celle-ci par la suite. La jante 20 comprend un premier siège 22 et un second siège 24 destinés à servir de portée d'appui aux premier 3 et second 5 bourrelets du pneumatique 1.

Le premier siège 22 comprend un fond tronconique 221 confondu localement avec un cône de révolution coaxial à la jante et ouvert vers le second siège 24, un bossage de sécurité 222 prolongeant le fond 221 du premier siège 22 vers le second siège 24, et un rebord externe 223 prolongeant le fond 221 du premier siège du côté opposé au second siège 24. Le diamètre maximum du premier siège 22 est Φ_{S1max}. Ce diamètre correspond au diamètre maximum du bossage de sécurité 222.

Le second siège 24 comprend un fond tronconique 241 confondu localement avec un cône de révolution coaxial à la jante et ouvert vers le premier siège 22, un bossage de sécurité 242 prolongeant le fond 241 du second siège 24 vers le premier siège 22 et un rebord externe 243 prolongeant le fond 241 du second siège du côté opposé au premier siège 22. Le diamètre maximum du second siège 24 est Φ_{S2max}. Ce diamètre correspond au diamètre maximum du bossage de sécurité 242.

Le diamètre maximum du second siège est supérieur à celui du premier siège. Dans l'exemple représenté, l'ordre de grandeur de l'écart entre les diamètres maximum Φ_{S2max}-Φ_{S1max} est de l'ordre de 20 mm. L'écart entre les rayons minimum des deux sièges est donc de l'ordre de 10 mm.

Du premier siège 22 vers le second siège 24, on trouve successivement une gorge circonférentielle 26, une portée d'appui 28 et une seconde gorge circonférentielle 30. La seconde gorge circonférentielle 30 sert de gorge de montage pour le second siège 24. La gorge 30 comprend un flanc 301 adjacent au bossage de sécurité 242. Sur la portée d'appui 28, se trouve une rainure circonférentielle 281. Le diamètre extérieur de la portée d'appui 28 correspond sensiblement au diamètre maximum du premier siège 22 pour permettre d'enfiler l'appui 10 sur cette portée d'appui 28 en franchissant le premier siège 22.

Le pneumatique 1 comprend deux bourrelets 3 et 5 destinés à venir en appui sur les sièges 22 et 24 de la jante 20, deux flancs 7 et une bande de roulement 9. Chaque bourrelet comporte des renforts annulaires orientés sensiblement circonférentiellement et pratiquement inextensibles. Ces renforts, tels des tringles 4 et 6, sont destinés à assurer en service le maintien des bourrelets sur les sièges de jante.

L'appui 10 comprend essentiellement :
- un sommet 12 sensiblement cylindrique destiné à entrer en contact avec la bande de roulement 9 du pneumatique 1 en cas de perte de pression, et laissant une garde par rapport à celui-ci à la pression nominale,
- une semelle 14 sensiblement cylindrique destinée à s'adapter autour de la jante 20, cette semelle comprend une pluralité de cales 141 disposées circonférentiellement, de section sensiblement demi cylindrique et destinées à coopérer avec la rainure 281 pour bloquer en position l'appui 10 sur la portée d'appui 28 de la jante 20, et
- un corps 16 annulaire reliant la semelle 14 et le sommet 12, ce corps comprend un ensemble de cloisons 160 en forme de Y reliant sensiblement radialement la semelle et le sommet et orientées sensiblement axialement d'un côté à l'autre de l'appui.

Cet appui peut comprendre un logement 40 qui débouche radialement intérieurement relativement à l'appui et qui est destiné à recevoir un module électronique 50. Un tel module électronique fait partie d'un système de surveillance de la pression des pneumatiques tel que celui présenté dans le document WO 94/20317. Le module électronique mesure périodiquement les valeurs de pression et de température de l'air de la cavité constituée par le pneumatique et la jante et envoie aussi périodiquement ces valeurs à une unité centrale où ces valeurs sont analysées et traitées.

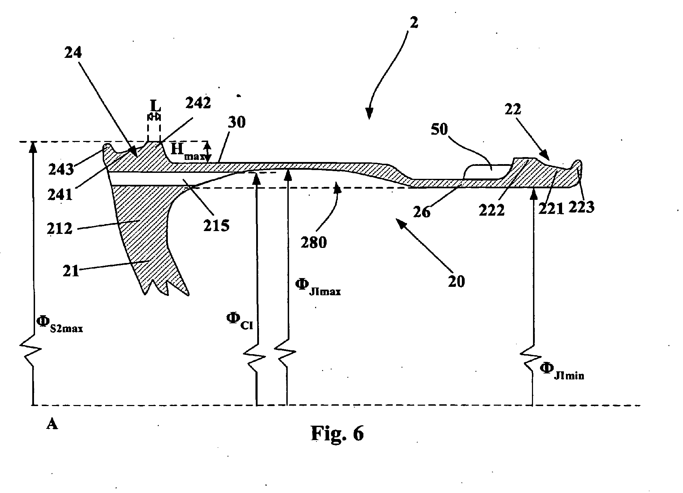

Un tel module électronique peut aussi être fixé à la valve de roue qui débouche dans la seconde gorge circonférentielle 30, il peut aussi être fixé à la paroi radialement extérieure de la première gorge circonférentielle 26 (voir la figure 6). Cette fixation peut être réalisée par différents moyens connus, tels collage, soudage, rivetage et al.

La semelle 14 comporte des renforts orientés circonférentiellement tels des fils d'acier ou des renforts textiles haut module comme de l'aramide. Leur fonction est de s'opposer aux efforts de centrifugation subis par l'appui lors de roulage à grande vitesse pour permettre à l'appui de rester en appui contre la portée d'appui sans se déplacer circonférentiellement. Ces renforts non représentés sur la figure sont disposés axialement de part et d'autre du logement 40.

La figure 1 présente l'ensemble pneumatique 1, appui 10 et jante 20 monté. On voit que l'appui est disposé autour de la portée d'appui 28 de la jante 20 et s'étend axialement radialement extérieurement relativement à la gorge 30 jusqu'à venir en appui contre le flanc 301 de cette gorge 30. La partie de l'appui disposée autour de la portée d'appui 28 est la partie dite « de support » ; c'est cette partie de support 17 qui porte principalement la charge lors d'un roulage à plat avec contact entre la bande de roulement du pneumatique et le sommet de l'appui. La partie de l'appui disposée autour de la gorge 30 est dite partie « de blocage ». Cette partie de blocage 18 a pour fonction d'abriter le logement 40 et de bloquer en position sur son siège 24 le second bourrelet 5 du pneumatique 1. Cette fonction anti-décoincement de la partie de blocage 18 de l'appui complète l'action similaire du bossage de sécurité 242 du second siège 24.

A la figure 1, on voit que le disque 21 est relié à la jante 20 du côté du second siège de jante 24, c'est-à-dire du côté du siège de plus grand diamètre. Le bossage de sécurité 242 du siège 24 est la partie de la jante de plus grand diamètre. C'est donc celle qui est la plus sollicitée mécaniquement lors de chocs trottoir ou nid de poule. Cette zone se trouve ainsi adjacente à la liaison entre le disque 21 et la jante 20 et a donc une forte rigidité favorable à une excellente résistance mécanique aux chocs. Le premier siège de jante est aussi moins sollicité mécaniquement relativement aux roues de l'état de la technique cela permet de diminuer l'épaisseur de la jante dans cette zone et ainsi de diminuer la masse totale de la roue. Dans le cas d'une comparaison à diamètre du siège extérieur ou second siège constant, on peut obtenir un gain de masse pouvant aller jusqu'à 20%.

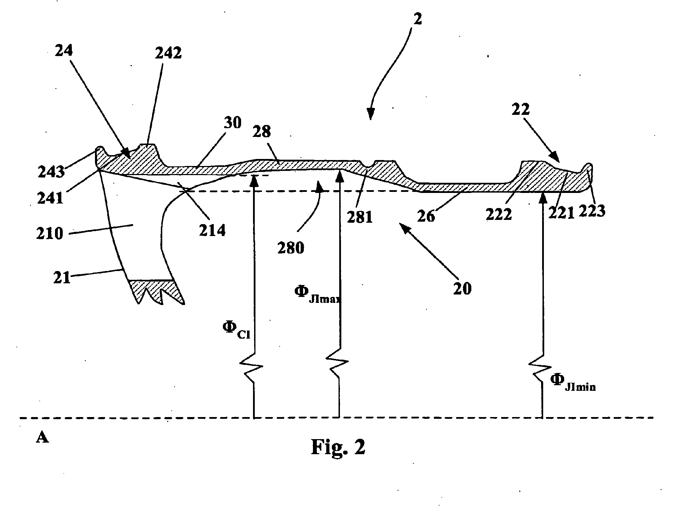

La figure 2 présente une coupe méridienne partielle de la roue 2 selon l'invention seule. La paroi radialement intérieure de la jante 20 a un diamètre minimum Φ_{JImin} au niveau du premier siège 22 ou siège intérieur. Puis, au niveau de la portée d'appui 28, le diamètre augmente jusqu'à une valeur maximum Φ_{JImax}. On voit que l'écart notable entre ces deux diamètres crée une cavité 280 où sont susceptibles de s'accumuler des matières diverses telles de l'eau, de la glace, de la boue ou des débris variés. Ces matières accumulées peuvent perturber les équilibres statique et dynamique de la roue en créant des balourds.

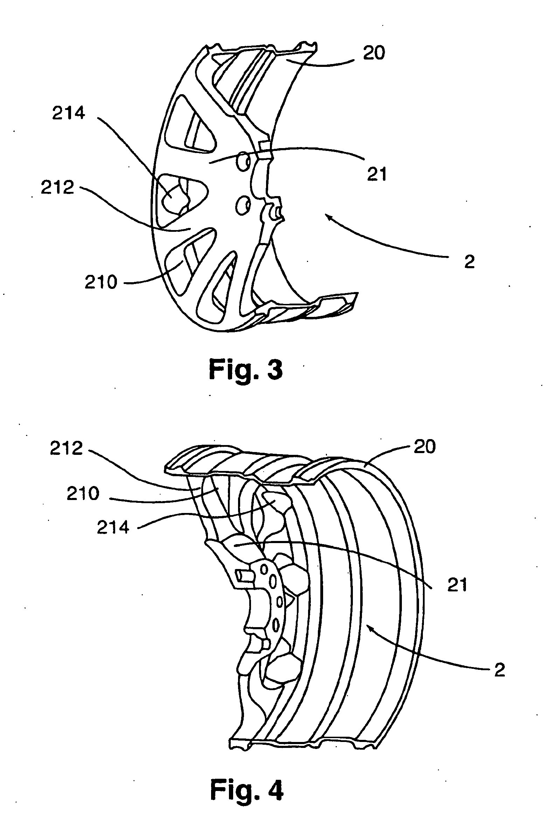

Pour résoudre ce problème, la roue selon l'invention comprend un canal, ici une rainure 214 ménagée, comme le montrent les figures 2, 3 et 4, sur la paroi radialement extérieure d'un ajour de ventilation 210 du disque 21. Ce canal ou rainure 214 présente une section droite avec un rayon de courbure élevé et débouche du côté intérieur du disque 21 dans la cavité 280 à une distance axiale Φ_{CI}/2 de la zone de diamètre maximum Φ_{JImax} de la face intérieure de la jante inférieure à 3 mm. Une telle faible épaisseur résiduelle permet de rendre pratiquement négligeables les questions de rétention de matières diverses dans la cavité 280. La rainure 214 débouche de l'autre côté du disque à une distance axiale très légèrement supérieure à celle Φ_{JImax}/2 pour qu'il y ait une légère inclinaison de la rainure pour favoriser l'évacuation.

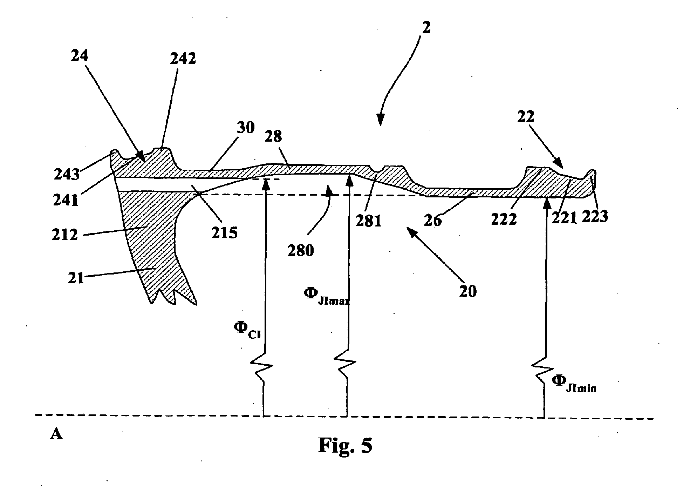

Les canaux d'évacuation peuvent aussi être ménagés dans un rayon 212. la figure 5 présente une coupe similaire à celle de la figure 2 mais passant par le rayon 212. Le point important est de limiter de façon similaire le volume de la cavité 280. Dans cette figure, on voit le canal 215 débouchant d'un côté dans la cavité 280 et de l'autre à l'extérieur du disque 21.

Le fait d'avoir un appui de soutien qui vient en appui contre le flanc 301 de la gorge 30 adjacent au bossage de sécurité 242 permet de diminuer de façon substantielle la largeur du bossage 242 relativement au fond tronconique 241 du siège 24. Cela permet ainsi de diminuer d'autant la profondeur de la gorge circonférentielle 30 sans dégrader la capacité de montage et de démontage du pneumatique. Cette profondeur de la gorge circonférentielle 30, dont la fonction est aussi de permettre le franchissement du siège 24 par le bourrelet 5 du pneumatique 1 peut être comprise entre 10 et 15 mm et de préférence entre 12 et 13 mm.

La figure 6 présente une variante de réalisation d'une roue selon l'invention. Cette roue est destinée à recevoir un pneumatique sans appui de soutien. La jante comporte une gorge 26 adjacente au premier siège et une gorge 30 adjacente au second siège. Chaque gorge sert de gorge de montage pour permettre au bourrelet de pneumatique correspondant de franchir le siège pour sa mise en place lors du montage ou lors du démontage du pneumatique.

La gorge 30 a un diamètre radialement intérieur Φ_{JImax} qui est supérieur au diamètre radialement intérieur Φ_{JImin} de la gorge 26. Il en résulte l'existence d'une cavité de rétention 280 et à nouveau l'intérêt de disposer de moyens pour évacuer les matières diverses qui peuvent s'accumuler dans cette cavité. Dans l'exemple représenté, la roue est pourvue de canaux 215 qui débouche d'un côté dans la cavité 280 et de l'autre à l'extérieur du disque 21.

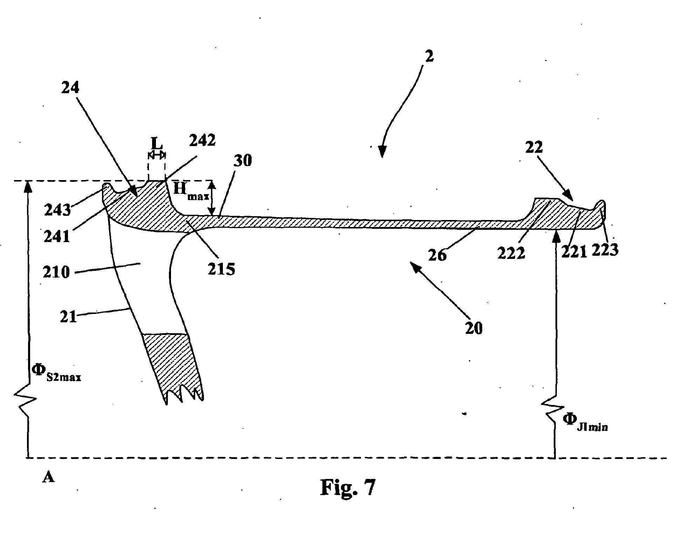

La figure 7 présente une autre variante de réalisation d'une roue selon l'invention, destinée aussi à recevoir un pneumatique sans appui de soutien. Comme précédemment, cette roue a son second siège 24 de diamètre supérieur au diamètre du premier siège 22. Le second siège est disposé du côté extérieur de la roue du côté de la liaison avec le disque.

Cette roue 2 de la figure 7 présente deux gorges 30 et 26 qui ont sensiblement le même diamètre intérieur et extérieur. En conséquence, la paroi radialement intérieure de la jante ne présente pas de cavité de rétention.

Pour permettre de bonnes performances anti-décoincement du bourrelet du pneumatique sur le second siège, ce second siège est pourvu d'un bossage de sécurité ou ledge de largeur notablement supérieure à celle du ledge de la roue de la figure 1 dans laquelle l'appui venait en appui contre le flanc de la gorge 30.

Dans ces conditions, la profondeur Hₘₐₓ de la gorge 30 doit être notablement supérieure et peut être comprise entre 23 et 27 mm pour des roues comportant un ledge de largeur de l'ordre de 15 mm. Ces valeurs permettent un montage aisé du second bourrelet sur le second siège et d'excellentes propriétés anti-décoincement. Ces valeurs sont données pour des roues de diamètre nominal compris entre 420 et 540 mm.

Cette roue a l'avantage d'être très aisément réalisée puisqu'elle ne présente pas de partie en contre dépouille dans sa paroi radialement intérieure.

L'invention n'est pas limitée aux exemples décrits et représentés et diverses modifications peuvent y être apportées sans sortir de son cadre qui n'est limité que par les revendications suivantes.

## Revendications

1. Roue de véhicule, de révolution, comportant un disque (21) et une jante (20) ladite jante comportant un premier (22) et un second siège (24) destinés à recevoir et maintenir un premier et un second bourrelets (35) de pneumatique, chaque siège ayant un fond sensiblement tronconique confondu localement avec un cône de révolution coaxial à la jante et ouvert vers l'autre siège, un bossage de sécurité (222,2x2) prolongeant le fond dudit siège vers l'autre siège, et un rebord externe (223, 243) prolongeant le fond dudit siège du côté opposé à l'autre siège, et le diamètre maximum du premier siège étant inférieur au diamètre maximum du second siège, **caractérisée en ce que** chaque siège comporte, du côté de l'autre siège, une gorge circonférentielle adjacente (26, 30) et **en ce que** la zone de liaison entre le disque (21) et la jante (20) est reliée à ladite jante du côté dudit second siège.

2. Roue selon la revendication 1, dans laquelle la profondeur (Hₘₐₓ) de la gorge adjacente au second siège (24) est adaptée pour permettre le franchissement dudit second siège par ledit second bourrelet du pneumatique sans permettre le franchissement dudit second siège par ledit premier bourrelet (3) du pneumatique.

3. Roue selon la revendication 2, dans laquelle, le bossage de sécurité (242) dudit second siège comportant une zone cylindrique de révolution ou ledge de largeur axiale L, la profondeur (Hₘₐₓ) de la gorge adjacente au second siège est fonction du diamètre maximum (Φ_{S2max}) et de la largeur axiale L dudit ledge.

4. Roue selon la revendication 1, dans laquelle, le profil radialement intérieur de ladite jante présentant progressivement du second siège vers la zone de liaison avec le disque un diamètre passant par un minimum (Φ_{JImin}) puis par un diamètre maximum (Φ_{JImax}) disposé axialement entre lesdits premier et second sièges, ladite roue comprend au moins un canal débouchant d'une part dans la zone du profil radialement intérieur de la jante de diamètre compris entre lesdits diamètre maximum (Φ_{JImax}) et minimum (Φ_{JImin}) et d'autre part à l'extérieur de la roue du côté du second siège.

5. Roue selon la revendication 4, dans laquelle, ledit canal débouche dans la zone radialement intérieure de ladite jante avec un diamètre (Φ_{CI}) égal au diamètre maximum du profil intérieur de ladite jante (Φ_{JImax}) diminué d'au plus 3 mm.

6. Roue selon l'une des revendications 4 et 5, dans laquelle ledit canal est confondu localement avec un secteur d'un cône de révolution ouvert vers le second siège.

7. Roue selon l'une des revendications 4 à 6, dans laquelle, ledit disque présentant une pluralité d'ajours de ventilation (210) ledit canal est une rainure ménagée dans la paroi radialement extérieure d'au moins l'un desdits ajours.

8. Roue selon l'une des revendications 4 à 7, dans laquelle, ledit disque présentant une pluralité d'ajours de ventilation disposés chacun entre deux rayons, ledit canal est ménagé dans au moins l'un desdits rayons.

9. Roue selon l'une des revendications 1 à 8, dans laquelle ladite gorge adjacente audit premier siège est destinée à recevoir un module électronique (50) de surveillance.

10. Roue selon l'une des revendications 1 à 9, dans laquelle ladite jante comporte disposée entre lesdites deux gorges une portée d'appui de diamètre sensiblement égal au diamètre maximum dudit premier siège.

11. Roue selon la revendication 10, dans laquelle la portée d'appui comprend une rainure circonférentielle destinée à bloquer en position ledit appui sur ladite portée d'appui.

12. Ensemble constitué d'une roue selon l'une des revendications 10 et 11 et d'un appui de soutien de bande de roulement, dans lequel ledit appui de soutien est disposé autour de ladite portée d'appui et s'étend axialement jusqu'au second siège.

13. Ensemble selon la revendication 12, dans lequel ledit appui comprend une partie de support disposée autour de la portée d'appui de ladite jante et une partie de blocage disposée radialement extérieurement relativement à ladite gorge circonférentielle.

14. Ensemble selon l'une des revendications 12 et 13, dans lequel, ledit second siège étant prolongé vers le premier siège par un flanc de ladite seconde gorge circonférentielle, ledit appui est adapté pour venir en appui contre ledit flanc de ladite seconde gorge circonférentielle.

15. Ensemble selon l'une des revendications 12 à 14, dans lequel ladite portée d'appui comporte une rainure circonférentielle qui coopère avec une pluralité de cales disposées circonférentiellement sur la paroi radialement intérieure de l'appui de soutien pour bloquer en position ledit appui sur ladite portée d'appui.

## Claims

1. Vehicle wheel, with symmetry of revolution, comprising a disc (21) and a rim (20), the said rim comprising a first (22) and a second (24) seat which seats are intended to receive and to hold a first and a second bead (3, 5) of the tyre, each seat having a substantially frustoconical bottom locally coinciding with a cone of revolution coaxial with the rim and open towards the other seat, a safety hump (222, 242) extending the bottom of the said seat towards the other seat, and an external lip (223, 243) extending the bottom of the said seat in the direction away from the other seat, the maximum diameter of the first seat being less than the maximum diameter of the second seat, **characterized in that** each seat comprises, on the side facing the other seat, an adjacent circumferential groove (26, 30) and **in that** the connecting region where the disc (21) and the rim (20) meet is connected to the said rim on the said second seat side.

2. Wheel according to Claim 1, in which the depth (Hₘₐₓ) of the groove adjacent to the second seat is designed to allow the said second bead (24) of the tyre to negotiate the said second seat without allowing the said first bead (3) of the tyre to negotiate the said second seat.

3. Wheel according to Claim 2, in which, with the safety hump (242) of the said second seat comprising a region that is cylindrical of revolution, or ledge, of axial width L, the depth (Hₘₐₓ) of the groove adjacent to the second seat is dependent on the maximum diameter (Φ_{S2max}) and on the axial width L of the said ledge.

4. Wheel according to Claim 1 in which, with the radially internal profile of the said rim having, progressing from the second seat towards the region of connection with the disc, a diameter that passes through a minimum (Φ_{JImin}) then through a maximum diameter (Φ_{JImax}) positioned axially between the said first and second seats, the said wheel comprises at least one passageway opening, on the one hand, into the region of the radially internal profile of the rim of a diameter somewhere between the said maximum (Φ_{JImax}) and minimum (Φ_{JImin}) diameters and, on the other hand, to the outside of the wheel on the second seat side.

5. Wheel according to Claim 4 in which the said passageway opens into the radially internal region of the said rim with a diameter (Φ_{CI}) equal to the maximum diameter of the internal profile of the said rim (Φ_{JImax}) reduced by 3 mm at most.

6. Wheel according to one of Claims 4 and 5, in which the said passageway coincides locally with a sector of a cone of revolution open towards the second seat.

7. Wheel according to one of Claims 4 to 6 in which, with the said disc having a number of ventilation openings (210), the said passageway is a slot formed in the radially external wall of at least one of the said openings.

8. Wheel according to one of Claims 4 to 7 in which, with the said disc having a number of ventilation openings each positioned between two spokes, the said passageway is formed in at least one of the said spokes.

9. Wheel according to one of Claims 1 to 8, in which the said groove adjacent to the said first seat is intended to house a monitoring electronic module (50).

10. Wheel according to one of Claims 1 to 9, in which the said rim has, positioned between the said two grooves, a bearing surface of a diameter more or less equal to the maximum diameter of the said first seat.

11. Wheel according to Claim 10, in which the bearing surface comprises a circumferential slot intended to lock the said insert in position on the said bearing surface.

12. Assembly comprising of a wheel according to one of Claims 10 and 11, and of a tread support insert, in which the said support insert is positioned around the said bearing surface and runs axially as far as the second seat.

13. Assembly according to Claim 12, in which the said insert comprises a support part positioned around the bearing surface of the said rim and a locking part positioned radially externally relative to the said circumferential groove.

14. Assembly according to one of Claims 12 and 13 in which, with the said second seat extended towards the first seat by a sidewall of the said second circumferential groove, the said insert is designed to bear against the said sidewall of the said second circumferential groove.

15. Assembly according to one of Claims 12 to 14 in which the said bearing surface comprises a circumferential slot which collaborates with a plurality of wedges positioned circumferentially on the radially internal wall of the support insert in order to lock the said insert in position on the said bearing surface.

## Patentansprüche

1. Drehsymmetrisches Fahrzeugrad, das eine Scheibe (21) und eine Felge (20) aufweist, wobei die Felge einen ersten (22) und einen zweiten Sitz (24) aufweist, die dazu bestimmt sind, einen ersten und einen zweiten Wulst (35) eines Luftreifens aufzunehmen, wobei jeder Sitz einem im Wesentlichen kegelstumpfförmigen Boden hat, der lokal mit einem zur Felge koaxialen und zum anderen Sitz hin offenen drehsymmetrischen Kegel zusammenfällt, wobei eine Sicherheitswölbung (222, 242) den Boden des Sitzes zum anderen Sitz hin verlängert, und eine äußere Randleiste (223, 243) den Boden des Sitzes auf der dem anderen Sitz entgegengesetzten Seite verlängert, und der maximale Durchmesser des ersten Sitzes geringer als der maximale Durchmesser des zweiten Sitzes ist, **dadurch gekennzeichnet, dass** jeder Sitz auf der Seite des anderen Sitzes eine angrenzende Umfangsrille (26, 30) aufweist, und dass die Verbindungszone zwischen der Scheibe (21) und der Felge (20) mit der Felge auf der Seite des zweiten Sitzes verbunden ist.

2. Rad nach Anspruch 1, bei dem die Tiefe (Hₘₐₓ) der an den zweiten Sitz (24) angrenzenden Rille geeignet ist, um die Überquerung des zweiten Sitzes durch den zweiten Wulst des Luftreifens zu erlauben, ohne die Überquerung des zweiten Sitzes durch den ersten Wulst (3) des Luftreifens zu erlauben.

3. Rad nach Anspruch 2, bei dem, da die Sicherheitswölbung (242) des zweiten Sitzes eine drehsymmetrische zylindrische Zone oder Ledge einer axialen Breite L aufweist, die Tiefe (Hₘₐₓ) der an den zweiten Sitz angrenzenden Rille vom maximalen Durchmesser (Φ_{S2max}) und von der axialen Breite L des Ledges abhängt.

4. Rad nach Anspruch 1, bei dem, da das radial innere Profil der Felge progressiv vom zweiten Sitz zur Verbindungszone mit der Scheibe einen durch ein Minimum (Φ_{πmin}) und dann durch ein Maximum (Φ_{πmax}) gehenden Durchmesser aufweist, der axial zwischen dem ersten und dem zweiten Sitz angeordnet ist, das Rad mindestens einen Kanal enthält, der einerseits in der Zone des radial inneren Profils der Felge mit einem Durchmesser zwischen dem maximalen (Φ_{πmax}) und dem minimalen Durchmesser (Φ_{πmin}) und andererseits außerhalb des Rads auf der Seite des zweiten Sitzes mündet.

5. Rad nach Anspruch 4, bei dem der Kanal in der radial inneren Zone der Felge mit einem Durchmesser (Φ_{Cl}) gleich dem maximalen Durchmesser des inneren Profils der Felge (Φ_{πmax}) verringert um höchstens 3 mm mündet.

6. Rad nach einem der Ansprüche 4 und 5, bei dem der Kanal lokal mit einem Sektor eines zum zweiten Sitz hin offenen drehsymmetrischen Kegels zusammenfällt.

7. Rad nach einem der Ansprüche 4 bis 6, bei dem, da die Scheibe mehrere Lüftungsöffnungen (210) aufweist, der Kanal eine Nut ist, die in der radial äußeren Wand mindestens einer der Öffnungen ausgespart ist.

8. Rad nach einem der Ansprüche 4 bis 7, bei dem, da die Scheibe mehrere Lüftungsöffnungen aufweist, die je zwischen zwei Radien angeordnet sind, der Kanal in mindestens einem der Radien angeordnet ist.

9. Rad nach einem der Ansprüche 1 bis 8, bei dem die an den ersten Sitz angrenzende Rille dazu bestimmt ist, ein elektronisches Überwachungsmodul (50) aufzunehmen.

10. Rad nach einem der Ansprüche 1 bis 9, bei dem die Felge zwischen den zwei Rillen angeordnet eine Auflagefläche mit einem Durchmesser im Wesentlichen gleich dem maximalen Durchmesser des ersten Sitzes aufweist.

11. Rad nach Anspruch 10, bei dem die Auflagefläche eine Umfangsnut enthält, die dazu bestimmt ist, die Auflage auf der Auflagefläche in Stellung zu blockieren.

12. Einheit, die aus einem Rad nach einem der Ansprüche 10 und 11 und aus einer Stützauflage eines Laufstreifens besteht, bei der die Stützauflage um die Auflagefläche herum angeordnet ist und sich axial bis zum zweiten Sitz erstreckt.

13. Einheit nach Anspruch 12, bei der die Auflage einen Tragbereich, der um die Auflagefläche der Felge herum angeordnet ist, und einen Blockierbereich enthält, der radial außen bezüglich der Umfangsrille angeordnet ist.

14. Einheit nach einem der Ansprüche 12 und 13, bei der, da der zweite Sitz zum ersten Sitz hin durch eine Flanke der zweiten Umfangsrille verlängert wird, die Auflage geeignet ist, um gegen die Flanke der zweiten Umfangsrille in Auflage zu kommen.

15. Einheit nach einem der Ansprüche 12 bis 14, bei der die Auflagefläche eine Umfangsnut aufweist, die mit mehreren Keilen zusammenwirkt, die in Umfangsrichtung auf der radial inneren Wand der Stützauflage angeordnet sind, um die Auflage auf der Auflagefläche in Stellung zu blockieren.
